# EUROPÄISCHE PATENTSCHRIFT

(11) **EP 2 105 360 B1**
(45) Veröffentlichungstag und Bekanntmachung des Hinweises auf die Patenterteilung: **29.09.2010**
(21) Anmeldenummer: 08005458.8
(22) Anmeldetag: 25.03.2008
(51) Int. Cl.: B60R 22/20

(54) **Vorrichtung zur Höhenverstellung des oberen Umlenk- oder Befestigungsbeschlages für ein Sicherheitsgurtsystem**
Device for adjusting the height of the upper deflection or attachment fitting of a safety belt system
Dispositif destiné au réglage en hauteur du point de guidage ou d'ancrage haut d'un système de ceinture de sécurité

(43) Veröffentlichungstag der Anmeldung: 30.09.2009
(73) Patentinhaber: Key Plastics Germany GmbH, 57368 Lennestadt (DE)
(72) Erfinder: Lohmann, Horst, 59846 Sundern (DE); Schauerte, André, 57368 Lennestadt (DE)
(74) Vertreter: Köchling, Conrad-Joachim

(56) Entgegenhaltungen:
- EP-A- 0 086 633
- EP-B- 1 516 788
- DE-A1- 10 017 970
- DE-A1- 19 801 268
- DE-C1- 19 500 268

## Beschreibung

Die Erfindung betrifft eine Vorrichtung zur Höhenverstellung des oberen Umlenk- oder Befestigungsbeschlages für den Schultergurt eines Sicherheitsgurtsystems in Fahrzeugen, bestehend aus einer an einem Fahrzeugaufbauteil angebrachten Riegelvorrichtung mit einer Führungsschiene aus Metall und mit darin angeordneten Rastausnehmungen, in die ein zugeordneter Rasthebel aus Metall einer Rasteinrichtung mit mindestens einer Rastnase eingreift, wobei der Rasthebel in einem in der Führungsschiene längsbeweglichen und mit einer Handhabe gekoppelten Gleitstück schwenkbeweglich zwischen einer Raststellung und einer verschiebestellung gelagert ist, wobei der Rasthebel ein Paar von ersten Rastnasen aufweist, die im Crashfall mit Randkanten eines Paares von Rastausnehmungen der Führungsschiene in Eingriff sind, sowie mindestens eine zweite Rastnase, die im normalen Betriebszustand der Vorrichtung an der Randkante der Rastausnehmung angreift, wobei die zweite Rastnase den ersten Rastnasen vorgelagert ist, so dass sie in Raststellung des Rasthebels zuerst zum Anschlag an die Randkante der Rastausnehmung zur Bestimmung der gewünschten Rastposition kommt und bei Überschreiten einer bestimmten Zugkraft nachgibt und ein Nachrücken des Rasthebels ermöglicht, bis die ersten Rastnasen in Eingriff mit der Randkante der Rastausnehmung sind.

Eine derartige Vorrichtung ist beispielsweise aus der EP 1 516 788 B1 bekannt. Bei dieser bekannten Ausbildung ist die zweite Rastnase als elastisches Element ausgebildet, wobei die elastische Rastnase vorzugsweise aus Kunststoff und das Bauteil mit den festen Rastnasen aus Metall besteht.

Bei der Ausbildung einer solchen elastischen Rastnase wird als nachteilig angesehen, dass das Reibverhalten zwischen der elastischen Rastnase und der Führungsschiene, die aus Metall, insbesondere Stahl, besteht, nicht besonders günstig ist, so dass bei der normalen Betätigung des Höhenverstellers der Verstellkomfort gegenüber einer Ausführung die aus Stahl besteht, nachteilig ist. Hinzu kommt, dass bei einer elastischen Ausbildung der Rastnase diese Elastizität über den Zeitraum einer längeren Benutzung einer solchen Einrichtung nachlässt, so dass die einwandfreie Funktion nicht mehr sichergestellt ist. Hinzu kommt, dass bei einer Ausbildung der Rastnase aus elastischem Material nach längerer Benutzungsdauer durch die Randkante der Rastausnehmung der Führungsschiene eine Kerbe oder dergleichen in der elastischen Rastnase gebildet wird, was zum Beispiel bei höherer Krafteinleitung in Folge einer Vollbremsung hervorgerufen werden kann. Daraus folgt, dass bei der Verstellung der Vorrichtung durch Betätigung der Handhabe, eine hakelige Verstellung des Riegels in die Freigabelage erfolgt oder sogar ein Blockieren des Riegels verursacht ist, so dass also auch hieraus Funktionsstörungen resultieren können.

Zum Stand der Technik wird weiterhin auf die DE 100 17 970 A1 verwiesen. Auch dort ist die zweite Rastnase durch eine Kunststoffeinlage gebildet, die elastisch ist, woraus die gleichen Nachteile resultieren, die hinsichtlich des oben angegebenen Standes der Technik auftreten.

Aus der DE 195 00 268 C1 ist eine entsprechende Vorrichtung bekannt, bei der nur eine Rastnase vorgesehen ist, wobei diese im Belastungsfall (Crashfall) verformt wird, wobei durch entsprechende Ausbildung der Rastnase ein verbesserter Eingriff mit der Rastkontur der Rastschiene erreicht werden soll. Bei einer solchen Ausbildung ist sowohl die Führungsschiene als auch die Rastnase aus Metall ausgebildet, so dass das Reibverhalten günstig ist. Jedoch ist auch bei dieser Ausbildung nicht auszuschließen, dass bei langfristiger Benutzung schon eine gewisse Verformung der Rastnase erfolgt, insbesondere dann, wenn das Fahrzeug eine Notbremsung ausführt, so dass nicht auszuschließen ist, dass sich die Rastnase schon bei der normalen Benutzung verformt, woraus dann eine hakelige Benutzung der Vorrichtung bei der normalen Betätigung resultiert. Hinzu kommt, dass die Verformung der Rastnase im Crashfall je nach Belastungsfall zu unterschiedlichen Ergebnissen führt, so dass die Verhakung nicht eindeutig bestimmbar ist.

In der EP 0 086 633 A2 schließlich ist in den dortigen Figuren 10 und 11 eine Ausführungsform beschrieben, bei der metallische Rastelemente vorgesehen sind. Die Rastelemente sind über eine spiralfeder miteinander gekoppelt. Im Normalfall greift eines der Rastelemente in die Rastausnehmungen der Führungsschiene ein, wobei im Crashbelastungsfall das zweite Element in die entsprechenden Rastkonturen eingreift. Hierbei greifen allerdings die beiden Rastelemente nicht in die gleiche Rastausnehmung ein, sondern in unterschiedliche Rastausnehmungen, so dass eine entsprechende Vielzahl von Rastausnehmungen in der Führungsschiene vorgesehen sein müssen, was zu einer Schwächung der Führungsschiene führt. Außerdem ist ein zusätzliches Element, nämlich ein Federelement notwendig, um die Funktion der Einrichtung sicher zu stellen. Diese Funktion beruht im Übrigen auf einer elastischen Halterung der Rasthebel, so dass die Funktion auch abhängig von der Ermüdung der entsprechenden Feder ist.

Ausgehend von diesem Stand der Technik liegt der Erfindung die Aufgabe zugrunde, eine Vorrichtung gattungsgemäßer Art zu schaffen, die ein gutes Reibverhalten bei der normalen Benutzung hat, bei der auch nach langzeitiger Benutzung eine einwandfreie Funktion sichergestellt ist, bei der im Crashfall eine sichere Verhakung der ersten Rastnase erfolgen kann, wobei zudem eine Bereicherung des Standes der Technik um eine weitere, funktionelle Lösung erreicht werden soll.

Zur Lösung dieser Aufgabe schlägt die Erfindung vor, dass die zweite Rastnase Bestandteil eines im Crashfall plastisch verformbaren Bestandteiles ist.

Gemäß dieser Ausbildung liegt weiterhin eine Auftrennung der beiden Funktionselemente, nämlich der ersten Rastnase, die für den Crashfall bestimmt ist und der zweiten Rastnase, die für den normalen Gebrauchsfall notwendig ist, vor. Beide Elemente sind unabhängig voneinander funktionsfähig und ausgebildet. Dadurch, dass die zweite Rastnase Bestandteil eines plastisch verformbaren Blechteiles ist, ist sichergestellt, dass bei der normalen Benutzung ein gutes Reibverhalten zwischen dieser Rastnase und der aus Stahl bestehenden Führungsschiene erreicht wird. Der Verstellkomfort ist daher sehr gut. Auch ist durch diese Ausbildung sichergestellt, dass durch die Ausbildung der zweiten Rastnase aus Metall auch bei höherer Krafteinleitung infolge beispielsweise einer Vollbremsung eine Ausbildung von Kerben oder dergleichen an der zweiten Rastnase infolge der Randkante der Führungsschiene nicht auftritt, da eine solche Belastung zur Verformung des Blechteiles nicht ausreicht. Zudem ist eine solche Ausbildung in einfacher weise zu realisieren.

Besonders bevorzugt ist vorgesehen, dass die Führungsschiene zwei Reihen von zueinander parallelen Rastausnehmungen aufweist, die jeweils Rastausnehmungspaare bilden, dass der Rasthebel ein erstes U-förmiges Formteil ist, dessen Schenkel an ihrer einen Stirnkante die ersten Rastnasen aufweisen, dass in das erste U-förmige Formteil als plastisch verformbares Blechteil ein zweites U-förmiges Teil eingesetzt ist, dessen Schenkel die zweiten Rastnasen bilden, wobei die Rastausnehmungen so bemessen sind, dass jeweils eine erste Rastnase und eine zweite Rastnase in die Rastausnehmung passen, und wobei bei einer Crashbelastung das Blechteil mit den zweiten Rastnasen, die an den Randkanten der Rastausnehmungen angreifen, plastisch verformt wird, so dass die ersten Rastnasen freigelegt sind und an den Randkanten der Rastausnehmungen verrasten.

Durch diese Ausbildung ist einerseits sichergestellt, dass jeweils zwei Rastnasen mit jeweils zwei Rastausnehmungen der Führungsschiene in Eingriff sind. Die Ausbildung der beiden U-förmigen Formteile ermöglicht ein einfaches Zusammenfügen der Formteile zu einer funktionstüchtigen Einheit, wobei zudem das plastisch verformbare Blechteil in dem stabilen ersten U-förmigen Formteil gehalten ist, so dass das erste U-förmige Formteil eine unerwünschte Verformung des plastisch verformbaren Blechteiles bei der bestimmungsgemäßen Benutzung (Ausnahme der Crashbelastung) verhindert.

Um die beiden Formteile allein durch die Formgebung sicher aneinander zu fixieren, so dass bei der bestimmungsgemäßen Belastung keine Verschiebung der Formteile zueinander in Längsrichtung der Schiene erfolgen kann, ist vorgesehen, dass das erste U-förmige Formteil in seiner Basis eine im Wesentlichen rechteckige Ausnehmung aufweist, in die ein passend geformter Ausschnitt der Basis des zweiten U-förmigen Teiles eingesetzt ist, welches lediglich mit den Schenkeln des zweiten U-förmigen Teils über Materialbereiche verbunden ist, von den in Längsrichtung der Basis des zweiten Teiles vorgesehenen weiteren Endbereichen der Basis getrennt ist, die wiederum mit den Schenkeln des zweiten U-förmigen Teiles verbunden sind und die von den die Ausnehmung begrenzenden, in Längsrichtung der Basis des ersten U-förmigen Formteiles sich erstreckenden Basisteilen dieses Formteiles übergriffen sind.

Das zweite U-förmige Teil wird mit dem entsprechenden Ausschnitt der Basis in die im Wesentlichen rechteckige Ausnehmung des U-förmigen Formteiles eingepasst, so dass beide Teile, zumindest in Schienenlängsrichtung der Führungsschiene gesehen, formschlüssig ineinander gesetzt sind und sich gegenseitig sichernden Halt gewährleisten. Dadurch, dass der Ausschnitt des zweiten U-förmigen Teiles lediglich mit den Schenkeln des U-förmigen Teiles verbunden ist, in Längsrichtung der Basis des zweiten U-förmigen Teiles aber beispielsweise durch Trennschnitte vom weiteren Verlauf der Basis getrennt ist, ist eine zusätzliche Verformungsmöglichkeit im Crashfall gegeben, weil das zweite U-förmige Formteil sich entsprechend der durch die Einschnitte gebildeten Schwächung leichter verformen kann. Dabei können die Endbereiche der Basis des zweiten Formteiles rinnenförmig geformt sein, um eine zusätzliche Steife in Längsrichtung des zweiten Formteiles zu bilden. Diese Ausbildung ist der gewünschten plastischen Verformung des zweiten U-förmigen Teiles bei einer crashbedingten Belastung förderlich, weil durch diese Ausbildung ein Einknicken des zweiten U-förmigen Formteiles erreicht wird, wodurch die Rastkontur des zweiten U-förmigen Teiles plastisch verdrängt wird und die Eingriffskontur des ersten U-förmigen Teiles freigelegt wird, die dann mit den Randkanten der Rastausnehmung in Eingriff sind.

Um die beiden Teile bleibend aneinander zu fixieren, ist zusätzlich vorgesehen, dass ein Befestigungsteil vorgesehen ist, welches die Basis des ersten U-förmigen Formteiles auf der den Schenkeln abgewandten Seite überdeckt und mit dem Ausschnitt der Basis des zweiten U-förmigen Teils verbunden ist, so dass das erste U-förmige Formteil mit dem zweiten U-förmigen Teil unverlierbar verbunden ist.

Dieses Befestigungsteil dient lediglich zur Fixierung der Solllage der beiden U-förmigen Teile aneinander. Es muss keine Kräfte aufnehmen, weder in der Normalgebrauchssituation noch im Crashfall, so dass dieses Befestigungsteil aus Kunststoff bestehen kann. Es kann in Form eines separaten Teiles vorgesehen sein oder es kann auch in Form einer die Formteile verbindenden Aufspritzung des Befestigungsteiles angeordnet werden.

Vorzugsweise ist dabei vorgesehen, dass der Ausschnitt der Basis des zweiten U-förmigen Teils Ankerbohrungen aufweist, in die Ankerbolzen eingreifen, die von der Unterseite des Befestigungsteils abragen und die mit dem Ausschnitt vernietet sind.

Durch diese Ausbildung ist eine einfache Montage und eine einfache Fixierung der Teile aneinander erreicht. Zusätzlich kann das Befestigungsteil noch weitere Funktionen erfüllen.

Dazu ist vorgesehen, dass das Befestigungsteil oberseitig einen Haltevorsprung aufweist, auf dem eine Vorspannfeder gehalten ist, die sich am Gleitstück abstützt und den Rasthebel in Richtung der Rastausnehmungen drückt.

Eine solche Vorspannfeder, beispielsweise in Form einer Schraubendruckfeder ist möglicherweise ohnehin vorgesehen, wobei der Haltevorsprung des Befestigungsteils ein Widerlager für die Vorspannfeder bildet und ebenso eine Lagesicherung für diese darstellt.

Auch kann vorgesehen sein, dass das Befestigungsteil oberseitig einen Vorsprung aufweist, der einen Mitnehmer für das Gleitstück bildet.

Besonders bevorzugt ist vorgesehen, dass das erste U-förmige Formteil aus einem dickwandigen Blech geformt ist und das zweite U-förmige Formteil aus dünnwandigem Blech geformt ist, wobei die Wandstärken der Teile sich etwa 1:5 bis 1:10 verhalten.

Um einen sicheren Eingriff im Crashfall zu gewährleisten, ist vorgesehen, dass die die ersten Rastnasen bildenden Stirnkanten des ersten U-förmigen Formteiles jeweils einen eine Eingreifkontur bildenden Hinterschnitt aufweisen.

Um die gewünscht plastische Deformation im Crashfall sicherzustellen und eine gewünschte Sollverformung zu erreichen, ist vorgesehen, dass die Schenkel des zweiten U-förmigen Teils mindestens eine, vorzugsweise mehrere Lochungen aufweisen.

Zudem dienen solche Lochungen auch zur Optimierung des Schwerpunktes des zweiten U-förmigen Teiles, was hinsichtlich der Funktion förderlich ist.

Um den Komfort der Vorrichtung weiter zu verbessern, ist vorgesehen, die zweite Rastnase durch eine dem Schwenkradius des Rasthebels angepasste Ablaufkontur gebildet ist.

Besonders bevorzugt ist vorgesehen, dass das erste U-förmige Formteil aus vergütetem stahl besteht, und das zweite U-förmige Teil aus nicht vergütetem, gegenüber vergütetem Stahl weicherem Stahl besteht.

Eine weitere bevorzugte Ausführungsform, bei der die Rastausnehmungen der Führungsschiene mittig der Basis der Führungsschiene ausgebildet sind und eine zweite Rastnase zwischen zwei ersten Rastnasen angeordnet ist, wird darin gesehen, dass die zweite Rastnase fest mit den benachbarten ersten Rastnasen verbunden ist.

Bevorzugt ist dabei vorgesehen, dass die ersten Rastnasen an der Stirnrandkante von zueinander parallel angeordneten ebenen ersten Formteilen aus Stahl ausgebildet sind, dass zwischen den einander zugewandten Seitenflächen der ersten Formteile ein bis auf die zweite Rastnase formgleiches zweites Formteil aus weichem Stahl angeordnet und mit seinen Seitenflächen an den Seitenflächen der ersten Formteile befestigt oder mit diesen verbunden ist.

Bei dieser Ausgestaltung greift im Normalfall die zweite Rastnase in die entsprechende Rastausnehmung der Führungsschiene ein und liegt an der Randkante der Rastausnehmung an. Bei einer Crashbelastung wird die zweite Rastnase plastisch verformt, so dass die ersten Rastnasen freigelegt sind und mit der Randkante der Rastausnehmung in wirkeingriff gelangen können. Auch hierbei besteht das Formteil, an welchem die ersten Rastnasen angeformt sind, aus hochfestem Stahl, während das Formteil, an dem die zweite Rastnase ausgeformt ist, aus weicherem, infolge Crashbelastung verformbarem Stahl besteht. Die Verbindung der Formteile miteinander kann in beliebiger Art und Weise erfolgen, beispielsweise durch Verklebung, Verlötung, Verschweißung oder auch durch Formschluss.

Eine andere bevorzugte Weiterbildung wird darin gesehen, dass der die ersten und zweiten Rastnasen aufweisende Rasthebel ein einstückiges Formteil aus Stahl ist, wobei die die ersten Rastnasen bildenden Bestandteile des Rasthebels breiter ausgebildet sind als der die zweite Rastnase bildende Bestandteil, wobei der die zweite Rastnase bildende Bestandteil so schmal ausgebildet ist, dass es bei crashbedingter Belastung verformt wird und das Nachrücken des Rasthebels ermöglicht, bis die ersten Rastnasen in Eingriff mit der Randkante der Rastausnehmung sind.

Bei dieser Ausführungsform ist der gesamte Rasthebel aus gleichem Material gefertigt, wobei es sich beispielsweise um ein gesintertes Stahlteil handeln kann oder auch ein mittels Stanztechnik erzeugtes Teil. Die Deformationszone, die durch die zweite Rastnase gebildet ist, kann in geeigneter Weise angeformt werden oder angeprägt werden. Hierbei ist die Güte des Werkstoffes für alle Elemente gleich. Durch die entsprechend schmale Bemessung des Bestandteiles, welches die zweite Rastnase aufweist, wird auch hierbei bei crashbedingter Belastung erreicht, dass sich die zweite Rastnase plastisch verformen kann, bis die ersten Rastnasen in Eingriff mit der Randkante der Rastausnehmung gelangen.

Ausführungsbeispiele der Erfindung sind in der Zeichnung dargestellt und im Folgenden näher beschrieben. Es zeigt:
- Figur 1: einen Ausschnitt einer Höhenverstellvorrichtung in Seitenansicht, in Mittellängsschnitt gesehen;
- Figur 2: eine Einzelheit der Vorrichtung in Schrägansicht;
- Figur 3: desgleichen in Seitenansicht;
- Figur 4: desgleichen in Unteransicht;
- Figur 5: ein einzelnes Bauteil in Seitenansicht;
- Figur 6: desgleichen in Schrägansicht von vorn gesehen;
- Figur 7: ein weiteres Einzelteil in seitenansicht;
- Figur 8: das Teil in Schrägansicht von vorn gesehen;
- Figur 9: ein weiteres Einzelteil in Seitenansicht;
- Figur 10: das Einzelteil in Rückansicht;
- Figur 11: das Teil von schräg vorn gesehen;
- Figur 12: eine Variante analog Figur 1 im Schnitt XII der Figur 13 gesehen;
- Figur 13: eine Vorrichtung in der Rückansicht;
- Figur 14: eine variante eines Rasthebels in Ansicht;
- Figur 15 u. 16: Einzelheiten der Figur 14 in Seitenansicht;
- Figur 17: eine weitere Variante in der Ansicht gemäß Figur 14 gesehen;
- Figur 18: die Variante in Seitenansicht.

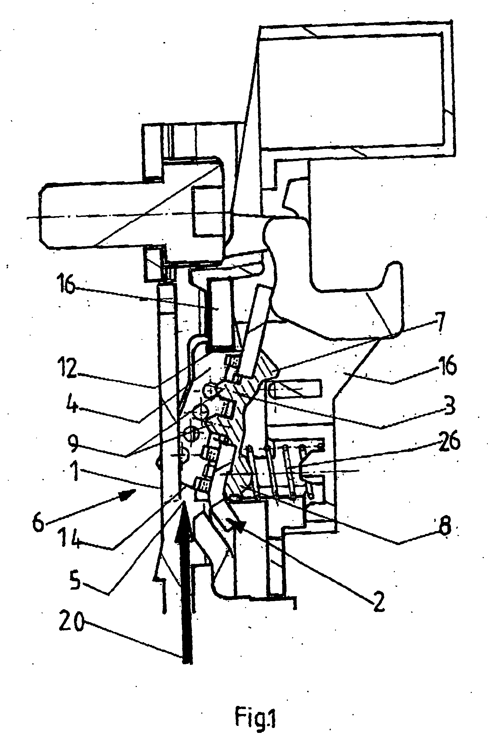

In Figur 1 ist ein entsprechendes Detail einer Höhenverstellung eines oberen Umlenk- und Befestigungsbeschlages für den Schultergurt eines Sicherheitsgurtsystems für Kraftfahrzeuge gezeigt. Es besteht aus einer an einem Fahrzeugbauteil angebrachten Riegelvorrichtung mit einer Führungsschiene 1 aus Metall und mit darin angeordneten Rastausnehmungen 6. Die Führungsschiene ist im Ausführungsbeispiel im Querschnitt als C-Profil ausgebildet und weist in ihrer Basis zwei Reihen von parallel zueinander angeordneten, in gleicher Position nebeneinander angeordnete Rastausnehmungen 6 mit Rastkanten 5 auf. In der Führungsschiene 1 ist ein Gleitstück 16 angeordnet und gehalten, welches entlang der Führungsschiene verstellbar ist und welches in geeigneter Weise mit einer Umlenköse eines Sicherheitsgurtes verbunden werden kann. In diesem Element ist ein den Rastausnehmungen 6 zugeordneter Rasthebel 2 aus Metall als Bestandteil einer Rasteinrichtung mit mindestens einer Rastnase angeordnet. Der Rasthebel 2 ist in dem Gleitstück 16 schwenkbeweglich zwischen einer Raststellung, die in der Zeichnung gezeigt ist, und einer Verschiebestellung in der die Rasten aus den Rastausnehmungen 6 ausgehoben sind, gelagert. Der Rasthebel 2 weist dabei ein Paar von ersten Rastnasen 10 auf, die im Crashfall mit Randkanten 5 eines Paares von Rastausnehmungen 6 der Führungsschiene 1 in Eingriff sind, sowie mindestens eine zweite Rastnase 14, die im normalen Betriebszustand der Vorrichtung an der Randkante 5 der Rastausnehmungen 6 angreift. Die zweite Rastnase 14 ist den ersten Rastnasen 10 vorgelagert, so dass sie in Raststellung des Rasthebels 2 zuerst zum Anschlag an die Randkante 5 der Rastausnehmungen 6 zur Bestimmung der gewünschten Rastposition gelangt. Nur bei Überschreiten einer bestimmten Zugkraft gibt diese zweite Rastnase 14 nach und ermöglicht ein Nachrücken des Rasthebels 2 bis die ersten Rastnasen 10 in Eingriff mit der Randkante 5 der Rastausnehmungen sind. Die Krafteinwirkungsrichtung (Reaktionskraft) ist durch den Pfeil 20 in Figur 1 angegeben. Erfindungsgemäß ist die zweite Rastnase 14 Bestandteil eines plastisch, also bleibend verformbaren Blechteiles 4.

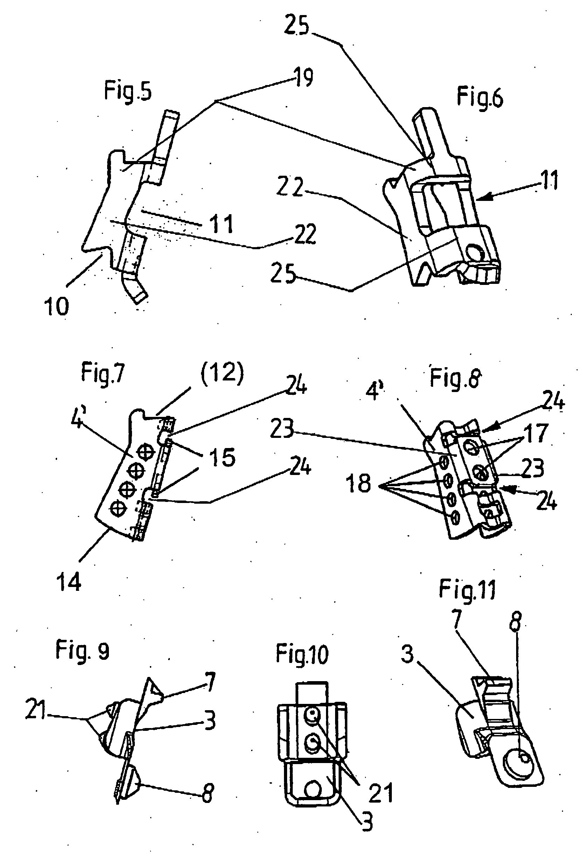

wie schon ausgeführt, weist die Führungsschiene 1 zwei Reihen von zueinander parallelen Rastausnehmungen 6 auf, die jeweils Rastausnehmungspaare bilden. Der Rasthebel 2 ist ein erstes U-förmiges Formteil 19, welches als Einzelelement in Figur 5 und 6 gezeigt ist, dessen Schenkel 22 an ihrer einen Stirnkante, die in Richtung der angreifenden Kräfte vorn liegt, die ersten Rastnasen 10 aufweisen. In das erste U-förmige Formteil 19 ist als plastisch verformbares Blechteil 4 ein zweites U-förmiges Teil 4' eingesetzt, welches in Figur 7 und 8 als Einzelteil gezeigt ist, dessen Schenkel an ihren in Krafteingriffsrichtung vorn liegenden Stirnkanten die zweiten Rastnasen 14 bilden. Die Rastausnehmungen 6 sind so bemessen, dass jeweils eine erste Rastnase 10 und eine zweite Rastnase 14 in die Rastausnehmungen 6 passen. Bei einer Crashbelastung wird das Blechteil 4 beziehungsweise das U-förmige Teil 4' mit den zweiten Rastnasen 14, die an den Randkanten 5 der Rastausnehmungen 6 angreifen, plastisch verformt, so dass die ersten Rastnasen 10 des ersten U-förmigen Formteils 19 freigelegt werden und an den Randkanten 5 der Rastausnehmungen 6 verrasten können.

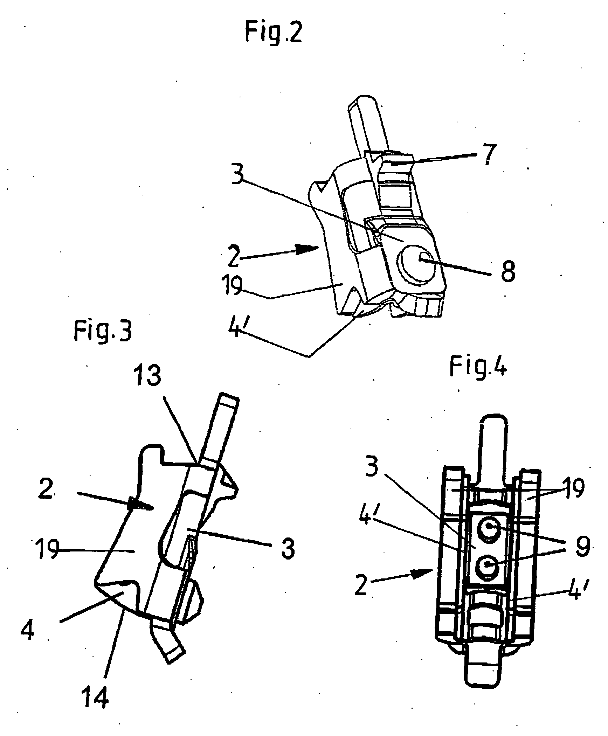

Wie insbesondere aus Figur 5 und 6 ersichtlich, weist das erste U-förmige Formteil 19 in seiner Basis eine im Wesentlichen rechteckige Ausnehmung 11 auf. In diese ist passend ein entsprechend geformter Ausschnitt 15 als Zentrier- und Verankerungselement als Bestandteil der Basis des zweiten U-förmigen Teiles 4' eingesetzt, welches lediglich mit den Schenkeln des zweiten u-förmigen Teiles 4' über Materialbereiche 23 verbunden ist, von den in Längsrichtung der Basis des zweiten Teiles 4' vorgesehenen weiteren Endbereichen der Basis aber getrennt ist, wie durch die Trennschnitte 24 in Figur 7 und 8 angegeben. Diese Endbereiche sind wiederum mit den Schenkeln des zweiten U-förmigen Teiles 4' verbunden und sind von den die Ausnehmungen 11 begrenzenden in Längsrichtung der Basis 25 des ersten U-förmigen Formteiles 19 sich erstreckenden Basisteilen (25) dieses Formteiles übergriffen. Zur Fixierung der Teile 19 und 4' aneinander ist ein Befestigungsteil 3 vorgesehen, welches in Figur 9 bis 11 in Einzeldarstellung gezeigt ist. Die komplette Baueinheit ist in Figur 2 bis 4 gezeigt. Das Befestigungsteil 3 überdeckt die Basis 25 des ersten U-förmigen Formteiles 19 auf der den Schenkeln 22 abgewandten Seite und ist im Überdeckungsbereich mit dem Ausschnitt 15 der Basis des zweiten U-förmigen Teiles 4' verbunden, so dass das erste U-förmige Formteil 19 mit dem zweiten U-förmigen Teil 4' unverlierbar verbunden ist. Zum Zwecke der Verbindung der Teile miteinander weist der Ausschnitt 15 der Basis des zweiten U-förmigen Teiles 4' Ankerlochungen 17 auf, in die Ankerbolzen 21 eingreifen, die von der Unterseite des Befestigungsteiles 3 abragen und die mit dem Ausschnitt 15 vernietet sind, so dass nietartige Verprägungen 9 gebildet sind, wie in Figur 4 veranschaulicht ist. Zusätzlich weist das Befestigungsteil 3 oberseitig einen Haltevorsprung 8 auf, auf dem eine Vorspannfeder 26 gehalten ist, wie in Figur 1 gezeigt, die sich am Gleitstück 16 abstützt und den Rasthebel 2 in Richtung der Rastausnehmungen 6 drängt. Zusätzlich weist das Befestigungsteil 3 oberseitig einen Vorsprung 7 auf, der einen Mitnehmer für das Gleitstück 16 bildet.

Das U-förmige Formteil 19 besteht aus einem dickwandigen Blechformteil, während das zweite U-förmige Formteil 4' aus dünnwandigem Blech geformt ist. Die Wandstärken der Teile verhalten sich etwa wie 1 zu 5 bis 1 zu 10.

Wie insbesondere aus Figur 5 ersichtlich, weisen die die ersten Rastnasen 10 bildenden Stirnkanten des ersten U-förmigen Formteiles 19 jeweils einen eine Eingriffskontur bildenden Hinterschnitt auf, so dass in der Rastlage eine sichere Verrastung an der Führungsschiene 1 erreicht ist.

Als Verformungssollzonen weisen die Schenkel des zweiten U-förmigen Teiles 4' mehrere Lochungen 18 auf, wie insbesondere in Figur 7 und 8 ersichtlich ist. Die zweite Rastnase 14 ist durch eine dem Schwenkradius des Rasthebels 2 angepasste Ablaufkontur gebildet, so dass eine komfortable Bedienung und Verrastung ermöglicht ist.

Vorzugsweise besteht das erste U-förmige Formteil 19 aus vergütetem, hochfestem Stahl, wohingegen das zweite U-förmige Teil 4' aus nicht vergütetem weichem Stahl besteht, so dass bei entsprechender Beanspruchung eine plastische Verformung erleichtert ist.

An dem zusammengesetzten Element, wie es in Figur 2 bis 4 gezeigt ist, greift in der Montagesolllage, wie aus Figur 1 ersichtlich, eine Druckkante 12 des Verstellteiles 16 als Widerlager und Gegenhalt an. Die in Figur 5 bis 11 dargestellten Einzelelemente werden zusammengefügt, wie in Figur 2 bis 4 ersichtlich ist. Das Befestigungsteil 3 kann alternativ auch als aufgespritztes Element vorgesehen sein, so dass es kein vorher handhabbares selbständiges Teil ist, sondern auf das zusammengesetzte Element aus den Bestandteilen 4' und 19 aufgeformt wird. Das so gebildete Einzelteil in Form des Rasthebels 2 ist dann in die Vorrichtung gemäß Figur 1 integriert.

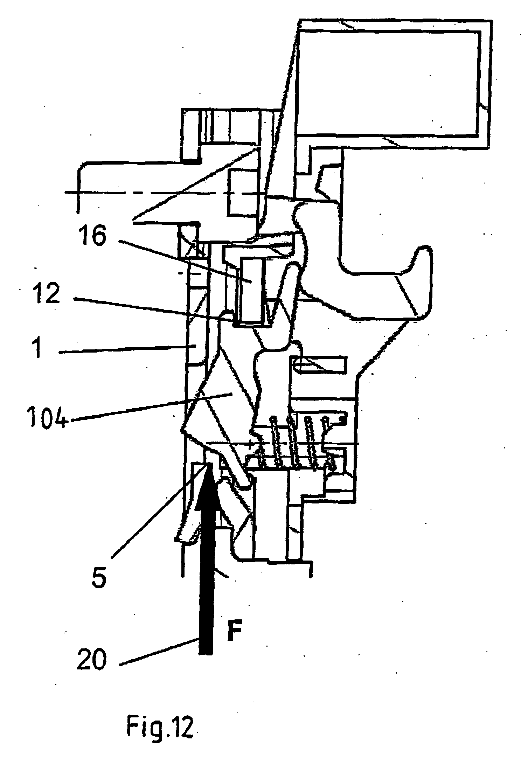

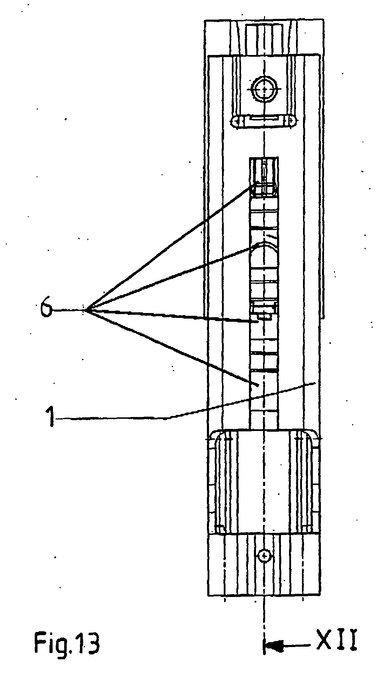

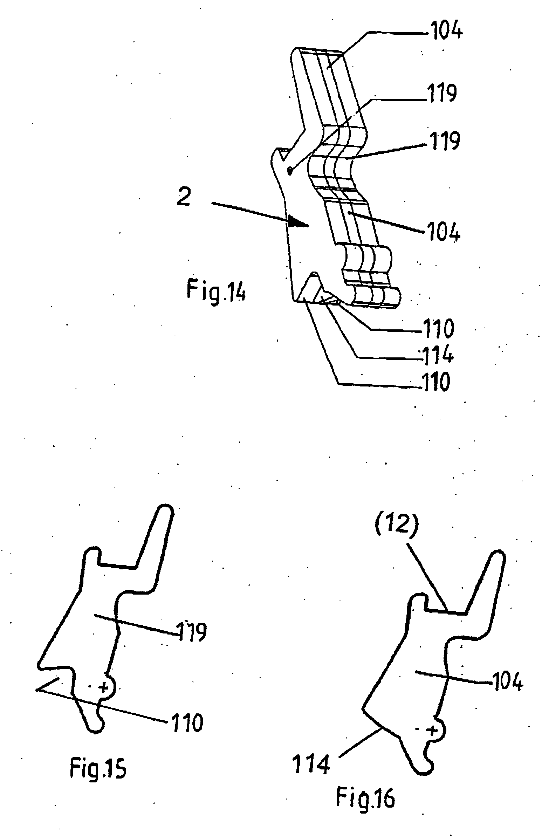

In den Figuren 12 bis 18 sind weitere Ausführungsformen der Erfindung gezeigt. Figur 12 zeigt eine Ausführungsform, ähnlich Figur 1. Hierbei weist die Führungsschiene 1 Ausnehmungen 6 auf, die mittig der Basis der Führungsschiene 1 ausgebildet und angeordnet sind, wie aus der Rückansicht gemäß Figur 13 ersichtlich ist. Der Rasthebel 2 ist in einer ersten Ausführungsform gemäß Figur 14 bis 16 aus mehreren Lamellen zusammengesetzt, wie anschaulich in Figur 14 gezeigt ist.

Die zweite Rastnase 114 ist gegenüber den ersten Rastnasen 110 vorspringend bezüglich der Randkante 5 der Rastausnehmungen 6 angeordnet und im Crashfall plastisch verformbar. Hierzu sind die ersten Rastnasen 110 an der Stirnrandkante von zwei parallel zueinander angeordneten ebenen ersten Formteilen 119 ausgebildet, wobei die Formteile 119 identische Form aufweisen. Zwischen den einander zugewandten Seitenflächen der ersten Formteile 119 ist ein bis auf die zweite Rastnase 114 formgleiches zweites Formteil 104 angeordnet, welches aus weicherem Stahl besteht, so dass es plastisch verformbar ist, wohingegen die Formteile 119 aus hochfestem Stahl bestehen. Die Formteile 119 und 104 sind konturengleich aufeinandergesetzt und an den Seitenflächen miteinander verbunden, beispielsweise durch Schweißen, Löten, Kleben oder auch durch Formschlussmittel wie Verhakungen oder dergleichen. Im Normalfall liegt auch bei dieser Ausführungsform die zweite Rastnase 114 an der entsprechenden Randkante 5 der Rastausnehmungen 6 an. Bei einer crashbedingten Belastung wird diese zweite Rastnase 114 plastisch verformt, so dass dann die ersten Rastnasen zur Anlage an die Randkante 5 der Rastausnehmungen 6 gelangen.

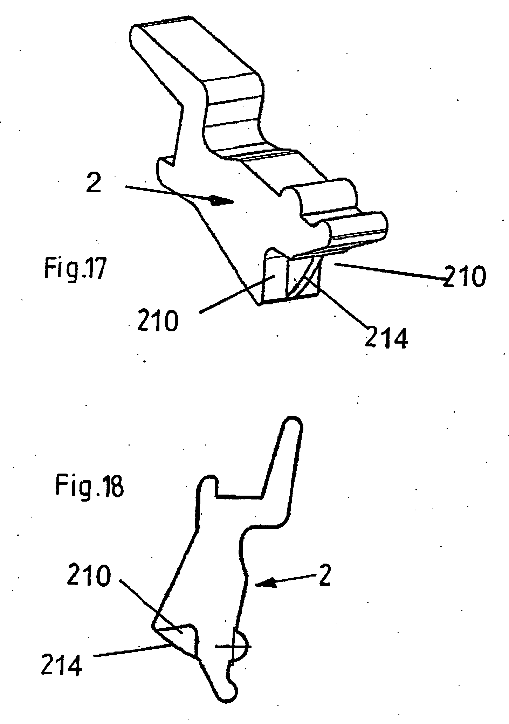

Bei der Ausführungsform gemäß Figur 17 und Figur 18 kommt die gleiche Führungsschiene 1 zum Einsatz, wie in Figur 12 und 13 gezeigt ist. Bei dieser Ausführungsform ist der die ersten Rastnasen 210 und die zweite Rastnase 214 aufweisende Rasthebel 2 ein einstückiges Formteil aus Stahl. Die die ersten Rastnasen 210 bildenden Bestandteile des Rasthebels 2 sind breiter ausgebildet als der die zweite Rastnase 214 bildende Bestandteil. Dabei ist das die zweite Rastnase 214 bildende Bestandteil so schmal ausgebildet, dass es bei crashbedingter Belastung verformt wird und das Nachrücken des Rasthebels 2 ermöglicht, bis die ersten Rastnasen 210 in Eingriff mit der Randkante 5 der Rastausnehmung 6 sind.

Wie insbesondere in Figur 17 gezeigt, sind die die ersten Rastnasen 210 bildenden ersten Bestandteile etwa 5 bis 10 mal breiter als das die zweite Rastnase 214 aufweisende Bestandteil.

Der Rasthebel 2 in dieser Ausgestaltung kann in Wege des Stanzens oder auch als Sinterteil hergestellt werden. Hierbei ist die Deformationszone (gebildet durch die zweite Rastnase 214) in das Gesamtbauteil integriert und wird je nach Herstellungsverfahren formgebend oder durch Anprägen hergestellt. Die Güte des Werkstoffes ist für alle Elemente gleich, wobei lediglich durch die schlanke Ausbildung erst die zweite Rastnase 214 bildenden Bestandteiles eine entsprechende Verformung bei crashbedingter Belastung ermöglicht ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Höhenverstellung des oberen Umlenk- oder Befestigungsbeschlages für den Schultergurt eines Sicherheitsgurtsystems in Fahrzeugen, bestehend aus einer an einem Fahrzeugaufbauteil angebrachten Riegelvorrichtung mit einer Führungsschiene (1) aus Metall und mit darin angeordneten Rastausnehmungen (6), in die ein zugeordneter Rasthebel (2) aus Metall einer Rasteinrichtung mit mindestens einer Rastnase eingreift, wobei der Rasthebel (2) in einem in der Führungsschiene (1) längsbeweglichen und mit einer Handhabe gekoppelten Gleitstück (16) schwenkbeweglich (13) zwischen einer Raststellung und einer Verschiebestellung gelagert ist, wobei der Rasthebel (2) ein Paar von ersten Rastnasen (10) aufweist, die im Crashfall mit Randkanten (5) einer Rastausnehmung (6) oder eines Paares von Rastausnehmungen (6) der Führungsschiene (1) in Eingriff sind, sowie mindestens eine zweite Rastnase (14), die im normalen Betriebszustand der Vorrichtung an der Randkante (5) der Rastausnehmung (6) angreift, wobei die zweite Rastnase (14) den ersten Rastnasen (10) vorgelagert ist, so dass sie in Raststellung des Rasthebels (2) zuerst zum Anschlag an die Randkante (5) der Rastausnehmung (6) zur Bestimmung der gewünschten Rastposition kommt und bei Überschreiten einer bestimmten Zugkraft nachgibt und ein Nachrücken des Rasthebels (2) ermöglicht, bis die ersten Rastnasen (10) in Eingriff mit der Randkante (5) der Rastausnehmung (6) sind, **dadurch gekenntzeichnet, dass** die zweite Rastnase (14) Bestandteil eines im Crashfall plastisch verformbaren Blechteiles (4) ist.

2. Vorrichtung nach Anspruch 1, **dadurch gekenntzeichnet, dass** die Führungsschiene (1) zwei Reihen von zueinander parallelen Rastausnehmungen (6) aufweist, die jeweils Rastausnehmungspaare bilden, dass der Rasthebel (2) ein erstes U-förmiges Formteil (19) ist, dessen Schenkel (22) an ihrer einen Stirnkante die ersten Rastnasen (10) aufweisen, dass in das erste U-förmige Formteil (19) als plastisch verformbares Blechteil (4) ein zweites U-formiges Teil (4') eingesetzt ist, dessen Schenkel die zweiten Rastnasen (14) bilden, wobei die Rastausnehmungen (6) so bemessen sind, dass jeweils eine erste Rastnase (10) und eine zweite Rastnase (14) in die Rastausnehmung (6) passen, und wobei bei einer Crashbelastung das Blechteil (4) mit den zweiten Rastnasen (14), die an den Randkanten (5) der Rastausnehmungen (6) angreifen, plastisch verformt wird, so dass die ersten Rastnasen (10) freigelegt sind und an den Randkanten (5) der Rastausnehmungen (6) verrasten.

3. Vorrichtung nach Anspruch 2, **dadurch gekennzeichnet, dass** das erste U-förmige Formteil (19) in seiner Basis eine im Wesentlichen rechteckige Ausnehmung (11) aufweist, in die ein passend geformter Ausschnitt (15) der Basis des zweiten U-förmigen Teiles (4') eingesetzt ist, welches lediglich mit den Schenkeln des zweiten U-förmigen Teils (4') über Materialbereiche (23) verbunden ist, von den in Längsrichtung der Basis des zweiten Teiles (4') vorgesehenen weiteren Endbereichen der Basis getrennt ist, die wiederum mit den Schenkeln des zweiten U-förmigen Teiles (4') verbunden sind und die von den die Ausnehmung (11) begrenzenden in Längsrichtung der Basis des ersten U-förmigen Formteiles (19) sich erstreckenden Basisteilen (25) dieses Formteiles übergriffen sind.

4. Vorrichtung nach Anspruch 3, **dadurch gekennzeichnet, dass** ein Befestigungsteil (3) vorgesehen ist, welches die Basis (25) des ersten U-förmigen Formteiles (19) auf der den Schenkeln (22) abgewandten Seite überdeckt und mit dem Ausschnitt (15) der Basis des zweiten U-förmigen Teils (4') verbunden ist, so dass das erste U-förmige Formteil (19) mit dem zweiten U-förmigen Teil (4') unverlierbar verbunden ist.

5. Vorrichtung nach Anspruch 4, **dadurch gekennzeichnet, dass** der Ausschnitt (15) der Basis des zweiten U-förmigen Teils (4') Ankerbohrungen (17) aufweist, in die Ankerbolzen (21) eingreifen, die von der Unterseite des Befestigungsteils (3) abragen und die mit Ausschnitt (15) vernietet sind.

6. Vorrichtung nach Anspruch 4 oder 5, **dadurch gekennzeichnet, dass** das Befestigungsteil (3) oberseitig einen Haltevorsprung (8) aufweist, auf dem eine Vorspannfeder (26) gehalten ist, die sich am Gleitstück (16) abstützt und den Rasthebel (2) in Richtung der Rastausnehmungen (6) drückt.

7. Vorrichtung nach einem der Ansprüche 4 bis 6, **dadurch gekennzeichnet, dass** das Befestigungsteil (3) oberseitig einen Vorsprung (7) aufweist, der einen Mitnehmer für das Gleitstück (16) bildet.

8. Vorrichtung nach einem der Ansprüche 2 bis 7, **dadurch gekenntzeichnet, dass** das erste U-förmige Formteil (19) aus einem dickwandigen Blech geformt ist und das zweite U-förmige Formteil (4') aus dünnwandigem Blech geformt ist, wobei die Wandstärken der Teile sich etwa 1:5 bis 1:10 verhalten.

9. Vorrichtung nach einem der Ansprüche 2 bis 8, **dadurch gekennzeichnet, dass** die die ersten Rastnasen (10) bildenden Stirnkanten des ersten U-förmigen Formteiles (19) jeweils einen eine Eingreifkontur bildenden Hinterschnitt aufweisen.

10. Vorrichtung nach einem der Ansprüche 2 bis 9, **dadurch gekennzeichnet, dass** die Schenkel des zweiten U-förmigen Teils (4') mindestens eine vorzugsweise mehrere Lochungen (18) aufweisen.

11. Vorrichtung nach einem der Ansprüche 1 bis 10, **dadurch gekennzeichnet, dass** die zweite Rastnase (14) durch eine dem Schwenkradius des Rasthebels (2) angepasste Ablaufkontur gebildet ist.

12. Vorrichtung nach einem der Ansprüche 2 bis 11, **dadurch gekennzeichnet, dass** das erste U-förmige Formteile (19) aus vergütetem Stahl besteht, und das zweite U-förmige Teil (4') aus nicht vergütetem, gegenüber vergütetem Stahl weicherem Stahl besteht.

13. Vorrichtung nach einem der Ansprüche 1,6,7,9 und 11, wobei die Rastausnehmungen (6) der Führungsschiene (1) mittig der Basis der Führungsschiene (1) ausgebildet sind und eine zweite Rastnase (114) zwischen zwei ersten Rastnasen (110) angeordnet ist, **dadurch gekennzeichnet, dass** die zweite Rastnase (114) fest mit den benachbarten ersten Rastnasen (110) verbunden ist.

14. Vorrichtung nach Anspruch 13, **dadurch gekennzeichnet, dass** die ersten Rastnasen (110) an der Stirnrandkante von zueinander parallel angeordneten ebenen ersten Formteilen (119) aus Stahl ausgebildet sind, dass zwischen den einander zugewandten Seitenflächen der ersten Formteile (119) ein bis auf die zweite Rastnase (114) formgleiches zweites Formteil (104) aus weichem Stahl angeordnet und mit seinen Seitenflächen an den Seitenflächen der ersten Formteile (119) befestigt oder mit diesen verbunden ist.

15. Vorrichtung nach dem Oberbegriff des Anspruches 13, **dadurch gekennzeichnet, dass** der die ersten und zweiten Rastnasen (210, 214) aufweisende Rasthebel (2) ein einstückiges Formteil aus Stahl ist, wobei die die ersten Rastnasen (210) bildenden Bestandteile des Rasthebels (2) breiter ausgebildet sind als der die zweite Rastnase 214) bildende Bestandteil, wobei der die zweite Rastnase (214) bildende Bestandteil so schmal ausgebildet ist, dass es bei crashbedingter Belastung plastisch verformt wird und das Nachrücken des Rasthebels (2) ermöglicht, bis die ersten Rastnasen (210) in Eingriff mit der Randkante (5) der Rastausnehmung (6) sind.

16. Vorrichtung nach Anspruch 15, **dadurch gekennzeichnet, dass** die die ersten Rastnasen (210) bildenden ersten Bestandteile etwa 5 bis 10 mal breiter sind als das die zweite Rastnase (214) aufweisende zweite Bestandteil.

## Claims

1. A device for adjusting the height of the upper deflection or attachment fitting of the shoulder belt of a safety belt system in vehicles, consisting of a locking device mounted at a vehicle body part and comprising a guide rail (1) made of metal and latch recesses (6) provided therein, into which engages an associated locking lever (2) made of metal of a latching device comprising at least one latching lug, the locking lever (2) being mounted in a sliding block (16) longitudinally movable in the guide rail (1) and coupled with a handle in a pivoting manner (13) between a latch position and a displacement position, the locking lever (2) comprising a pair of first latching lugs (10), which are in the case of a crash in engagement with edges (5) of a latch recess (6) or of a pair of latch recesses (6) of the guide rail (1), and at least one second latching lug (14), which under normal operating conditions of the device is at the edge (5) of the latch recess (6), the second latching lug (14) preceding the first latching lugs (10), so that in the latch position of the locking lever (2) it will first come into abutment against the edge (5) of the latch recess (6) for determining the desired latching position and if a certain tensile force is exceeded, will yield and permit a movement of the locking lever (2), until the first latching lugs (10) are in engagement with the edge (5) of the latch recess (6), **characterized by** that the second latching lug (14) is part of a sheet metal part (4) being plastically deformable in the case of a crash.

2. The device according to claim 1, **characterized by** that the guide rail (1) comprises two rows of parallel latch recesses (6), which respectively form pairs of latch recesses, that the locking lever (2) is a first U-shaped part (19), the legs (22) of which comprise at one of their front edges the first latching lugs (10), that in the first U-shaped part (19) a second U-shaped part (4') is inserted as a plastically deformable sheet metal part (4), the legs of which form the second latching lugs (14), the latch recesses (6) being dimensioned so that a first latching lug (10) and a second latching lug (14) respectively fit in the latch recess (6), and in the case of a crash the sheet metal part (4) with the second latching lugs (14), which are at the edges (5) of the latch recesses (6), being plastically deformed, so that the first latching lugs (10) are set free and latch at the edges (5) of the latch recesses (6).

3. The device according to claim 2, **characterized by** that the first U-shaped part (19) comprises at its base an essentially rectangular recess (11), into which a fitting section (15) of the base of the second U-shaped parts (4') is inserted, which is connected with the legs only of the second U-shaped part (4') by material portions (23), is separated from the further end portions of the base provided in the longitudinal direction of the base of the second part (4'), which in turn are connected with the legs of the second U-shaped part (4') and which are overlapped by the base parts (25) of this part limiting the recess (11) and extending in the longitudinal direction of the base of the first U-shaped part (19).

4. The device according to claim 3, **characterized by** that a fixing part (3) is provided, which overlaps the base (25) of the first U-shaped part (19) on the side directed away from the legs (22) and is connected with the section (15) of the base of the second U-shaped parts (4'), so that the first U-shaped part (19) is connected with the second U-shaped part (4') in a captive manner.

5. The device according to claim 4, **characterized by** that the section (15) of the base of the second U-shaped part (4') comprises anchor holes (17), into which engage the anchor bolts (21), which project from the lower side of the fixing part (3) and are riveted to the section (15).

6. The device according to claim 4 or 5, **characterized by** that the fixing part (3) has at its upper side a holding projection (8), on which a biasing spring (26) is mounted, which is supported at the sliding block (16) and pushes the locking lever (2) in the direction of the latch recesses (6).

7. The device according to one of claims 4 to 6, **characterized by** that the fixing part (3) has at its upper side a projection (7), which forms a driving part for the sliding block (16).

8. The device according to one of claims 2 to 7, **characterized by** that the first U-shaped part (19) is made of thick-walled sheet metal and the second U-shaped part (4') is made of thin-walled sheet metal, the ratio of the wall thicknesses of the parts being approximately 1:5 to 1:10.

9. The device according to one of claims 2 to 8, **characterized by** that the front edges of the first U-shaped part (19) forming the first latching lugs (10) each comprise an undercut forming an engagement contour.

10. The device according to one of claims 2 to 9, **characterized by** that the legs of the second U-shaped part (4') comprise at least one hole, preferably several holes (18).

11. The device according to one of claims 1 to 10, **characterized by** that the second latching lug (14) is formed by a contour adapted to the pivot radius of the locking lever (2).

12. The device according to one of claims 2 to 11, **characterized by** that the first U-shaped part (19) is made of tempered steel, and the second U-shaped part (4') is made of untempered steel being softer than tempered steel.

13. The device according to one of claims 1, 6, 7, 9 and 11, wherein the latch recesses (6) of the guide rail (1) are arranged centrally on the base of the guide rail (1) and a second latching lug (114) is arranged between two first latching lugs (110), **characterized by** that the second latching lug (114) is firmly connected with the adjacent first latching lugs (110).

14. The device according to claim 13, **characterized by** that the first latching lugs (110) are formed at the front edge of parallel plane first parts (119) made of steel, that between the side faces directed toward each other of the first parts (119) a second part (104) made of soft steel, said second part (104) having an identical shape except for the second latching lug (114), is arranged and is fixed with its side faces at the side faces of the first parts (119) or is connected therewith.

15. The device according to the preamble of claim 13, **characterized by** that the locking lever (2) comprising the first and second latching lugs (210, 214) is a one-piece part made of steel, the parts of the locking lever (2) forming the first latching lugs (210) being wider than the part forming the second latching lug (214), the part forming the second latching lug (214) being so narrow that it will be plastically deformed in the case of a crash and permits the movement of the locking lever (2), until the first latching lugs (210) are in engagement with the edge (5) of the latch recess (6).

16. The device according to claim 15, **characterized by** that the first parts forming the first latching lugs (210) are approximately 5 to 10 times wider than the second part comprising the second latching lug (214).

## Revendications

1. Dispositif de réglage en hauteur de la patte de guidage ou fixation supérieure de la sangle d'épaule d'un système de ceintures de sécurité dans des véhicules, consistant en un dispositif de verrouillage monté à un composant du corps du véhicule et comprenant un rail de guidage (1) en métal et des crans d'arrêt (6) prévus là-dedans, dans lesquels est engagé un levier à crans (2) en métal associé d'un dispositif d'arrêt comprenant au moins un ergot d'encliquetage, le levier à crans (2) étant monté dans une pièce coulissante (16) à déplacement longitudinal dans le rail de guidage (1) et couplé à une poignée de façon à pouvoir pivoter (13) entre une position d'arrêt et une position de déplacement, le levier à crans (2) comprenant une paire de premiers ergots d'encliquetage (10), qui au cas d'une collision sont en engagement avec des arêtes périphériques (5) d'un cran d'arrêt (6) ou d'une paire de crans d'arrêt (6) du rail de guidage (1), et au moins un deuxième ergot d'encliquetage (14), qui sous des conditions opérationnelles normales du dispositif se trouve à l'arête périphérique (5) du cran d'arrêt (6), le deuxième ergot d'encliquetage (14) précédant les premiers ergots d'encliquetage (10), de façon que dans la position d'arrêt du levier à crans (2) d'abord il aille en butée contre l'arête périphérique (5) du cran d'arrêt (6) pour déterminer la position d'arrêt désirée et si une certaine force de tension est dépassée, cède et permette un mouvement du levier à crans (2), jusqu'à-ce que les premiers ergots d'encliquetage (10) soient en engagement avec l'arête périphérique (5) du cran d'arrêt (6), **caractérisé en ce que** le deuxième ergot d'encliquetage (14) fait partie d'une pièce de tôle métallique (4) étant plastiquement déformable au cas d'une collision.

2. Dispositif selon la revendication 1, **caractérisé en ce que** le rail de guidage (1) comprend deux rangées de crans d'arrêt (6) parallèles, qui respectivement forment des paires de crans d'arrêt, que le levier à crans (2) est une première pièce en U (19), les jambes (22) de laquelle comprennent à une de leurs arêtes périphériques frontales les premiers ergots d'encliquetage (10), que dans la première pièce en U (19) une deuxième pièce en U (4') est insérée comme pièce de tôle métallique (4) plastiquement déformable, les jambes de laquelle forment les deuxièmes ergots d'encliquetage (14), les crans d'arrêt (6) étant dimensionnés de sorte qu'un premier ergot d'encliquetage (10) et un deuxième ergot d'encliquetage (14) respectivement soient bien adaptés au cran d'arrêt (6), et au cas d'une collision la pièce de tôle métallique (4) avec les deuxièmes ergots d'encliquetage (14), qui se trouvent aux arêtes périphériques (5) des crans d'arrêt (6), étant plastiquement déformée, de sorte que les premiers ergots d'encliquetage (10) soient libérés et s'encliquètent aux arêtes périphériques (5) des crans d'arrêt (6).

3. Dispositif selon la revendication 2, **caractérisé en ce que** la première pièce en U (19) comprend à son embase un évidement (11) essentiellement rectangulaire, dans laquelle une section (15) adaptée de l'embase de la deuxième pièce en U (4') est insérée, qui est liée seulement aux jambes de la deuxième pièce en U (4') par des sections de matériau (23), est séparée des autres parties d'extrémité de l'embase prévues dans la direction longitudinale de l'embase de la deuxième pièce (4'), les autres parties d'extrémité à leur tour étant liées aux jambes de la deuxième pièce en U (4') et étant recouvertes par les pièces d'embase (25) de cette pièce limitant l'évidement (11) et s'étendant dans la direction longitudinale de l'embase de la première pièce en U (19).

4. Dispositif selon la revendication 3, **caractérisé en ce qu'**une pièce de fixation (3) est prévue, qui recouvre l'embase (25) de la première pièce en U (19) sur le côté opposé aux jambes (22) et est liée à la section (15) de l'embase de la deuxième pièce en U (4'), de manière que la première pièce en U (19) soit liée à la deuxième pièce en U (4') d'une façon captive.

5. Dispositif selon la revendication 4, **caractérisé en ce que** la section (15) de l'embase de la deuxième pièce en U (4') comprend des trous d'ancrage (17), dans lesquels des boulons d'ancrage (21) sont engagés, qui font saillie à partir du côté inférieur de la pièce de fixation (3) et sont rivetés à la section (15).

6. Dispositif selon la revendication 4 ou 5, **caractérisé en ce que** la pièce de fixation (3) a à son côté supérieur une saillie de fixation (8), sur laquelle un ressort de sollicitation (26) est monté, qui est tenu à la pièce coulissante (16) et pousse le levier à crans (2) dans la direction des crans d'arrêt (6).

7. Dispositif selon une des revendications 4 à 6, **caractérisé en ce que** la pièce de fixation (3) a à son côté supérieur une saillie (7), qui forme une pièce d'entraînement pour la pièce coulissante (16).

8. Dispositif selon une des revendications 2 à 7, **caractérisé en ce que** la première pièce en U (19) est construite de tôle à parois épaisses et la deuxième pièce en U (4') est construite de tôle à parois minces, la proportion des épaisseurs des parois des pièces étant d'environ 1:5 à 1:10.

9. Dispositif selon une des revendications 2 à 8, **caractérisé en ce que** les arêtes périphériques frontales de la première pièce en U (19) formant les premiers ergots d'encliquetage (10) respectivement comprennent une contre-dépouille formant un contour d'engagement.

10. Dispositif selon une des revendications 2 à 9, **caractérisé en ce que** les jambes de la deuxième pièce en U (4') comprennent au moins un trou, de préférence plusieurs trous (18).

11. Dispositif selon une des revendications 1 à 10, **caractérisé en ce que** le deuxième ergot d'encliquetage (14) est formé par un contour adapté au rayon de rotation du levier à crans (2).

12. Dispositif selon une des revendications 2 à 11, **caractérisé en ce que** la première pièce en U (19) est produite d'acier revenu, et la deuxième pièce en U (4') est produite d'acier non revenu étant plus doux que l'acier revenu.

13. Dispositif selon une des revendications 1, 6, 7, 9 et 11, dans lequel les crans d'arrêt (6) du rail de guidage (1) sont arrangés centralement sur l'embase du rail de guidage (1) et un deuxième ergot d'encliquetage (114) est arrangé entre deux premiers ergots d'encliquetage (110), **caractérisé en ce que** le deuxième ergot d'encliquetage (114) est fermement lié aux premiers ergots d'encliquetage (110) voisins.

14. Dispositif selon la revendication 13, **caractérisé en ce que** les premiers ergots d'encliquetage (110) sont formés en acier à l'arête périphérique frontale des premières pièces (119) plates parallèles, qu'entre les faces latérales l'une dirigée vers l'autre des premières pièces (119) une deuxième pièce (104) en acier doux, cette deuxième pièce (104) ayant un forme identique à l'exception du deuxième ergot d'encliquetage (114), est arrangée et est fixée avec ses faces latérales aux faces latérales des premières pièces (119) ou est liée à celles-ci.

15. Dispositif selon le préambule de la revendication 13, **caractérisé en ce que** le levier à crans (2) comprenant les premiers et deuxièmes ergots d'encliquetage (210, 214) est une seule pièce en acier, les composants du levier à crans (2) formant les premiers ergots d'encliquetage (210) étant plus larges que la pièce formant le deuxième ergot d'encliquetage (214), la pièce formant le deuxième ergot d'encliquetage (214) étant tellement épais qu'elle soit plastiquement déformée au cas d'une collision et permette le mouvement du levier à crans (2), jusqu'à-ce que les premiers ergots d'encliquetage (210) soient en engagement avec l'arête périphérique (5) du cran d'arrêt (6).

16. Dispositif selon la revendication 15, **caractérisé en ce que** les premières pièces formant les premiers ergots d'encliquetage (210) sont par environ 5 à 10 fois plus larges que la deuxième pièce comprenant le deuxième ergot d'encliquetage (214).
